# EUROPEAN PATENT SPECIFICATION

(11) **EP 0 568 569 B1**
(45) Date of publication and mention of the grant of the patent: **12.03.1997**
(21) Application number: 92903201.9
(22) Date of filing: 17.01.1992
(51) Int. Cl.: A01J 5/04

(54) **IMPROVED MILK PUMPING AND METERING APPARATUS**
PUMPE UND DOSIERVORRICHTUNG FÜR MILCH
APPAREIL AMELIORE DE TRAITE ET DE MESURE DE LAIT

(30) Priority: 26.01.1991 GB 9101728; 12.07.1991 GB 9115071
(43) Date of publication of application: 10.11.1993
(73) Proprietor: R.J. FULLWOOD & BLAND LTD., Ellesmere Shropshire, SY12 9DF (GB)
(72) Inventor: HOLROYD, Michael 1 The Green Triplow, Hertfordshire SG8 7QX (GB); ALLEN, Dominic, James, Christopher, Kings Road Cambridge CB3 9JU (GB)
(74) Representative: Nash, Keith Wilfrid
(86) International application number: GB9200095
(87) International publication number: WO9212624

(56) References cited:
- WO-A-84/00665
- BE-A- 691 179
- DE-A- 1 782 133
- US-A- 2 949 883
- US-A- 4 344 385

## Description

### Field of invention

This invention concerns milking machines such as are employed for collecting and metering milk for example from milk-producing animals such as cows and sheep.

### Background to the invention

The purpose of a milking machine is to extract and facilitate collection of milk. In conventional machines milk is drawn into the machine via the teat cups and usually mixed with air which enters through the claw or the teat cups. The air is drawn in effectively to reduce the density of the milk in turn reducing the effect of milk transport on the vacuum levels employed for milking. This method of milk transport involving a relatively large volume ratio of air to milk introduces several problems:
- it complicates metering considerably
- the ducting size and complexity increases both purchase price and installation difficulty
- layout is complicated since it is necessary to limit the vertical and horizontal distances from the milking station to the collection point
- the vacuum stability at the teats is affected by the chaotic nature of the flow in the pipework
- the milk may suffer lipase damage due to excess agitation during milking and transport within the machine.

These problems can be reduced if the milk is separated from the air at an early stage, so that only milk has to be transported. Since it is not possible to avoid leakage of air into the teat cups, it is necessary to include a means for separating milk from the air reasonably close to the teat cups.

In International Publication No WOA8400665 there is described apparatus for milking in which milk is sucked from teat rubbers which are connected to the animal to be milked, into a centre-piece housing by a continuous vacuum being applied at the top of the housing. The housing contains a float and an outlet at its lower end, such that when the milk, which is separated from the air, falls below a given level the float will close off the outlet. In this arrangement the pump, which draws milk from the outlet, is entirely separate and spaced apart from the housing.

### Summary of the invention

According to the present invention there is provided milking apparatus wherein, at a multiple milking site whereat one or more animals are to be milked, an individual milk-air separator/pump means (100) is provided for each animal being milked, whereby milk separated from a milk-air mixture obtained from the individual animal is pumped away, characterised in that the separator/pump means comprises a pump and a housing within which the pump is treated and which receives the milk and allows it to settle before it is drawn into the pump.

In one arrangement, the separator/pump means is connected to the animal by a multi-bore hose, which keeps the milk from each teat separate, thus avoiding the risk of cross-contamination. In such an arrangement, a constant vacuum would be applied to each milk bore and a further bore would have a pulsating vacuum applied to it.

Flow of milk to the separator/pump means may be facilitated by provision of an air bleed into the milk lines, preferably a pulsed bleed obtained by the action of a bleed valve activated by the pulsating vacuum. However, when the milk from each teat cup is kept separate and there is no risk of cross flow between the teat cups, the air bleed may be unnecessary.

The separator may be constituted simply by a settling tank.

A preferred pump is of the reciprocating diaphragm kind, as later referred to, and may be driven by vacuum or, if available, compressed air.

As the pump only handles single phase liquid milk, a single phase integrating flow-meter can provide a required milk metering function.

Regulation of the pumping rate may be by means of a float level detector in the separator, and control may be effected by throttling the milk input or output, the compressed air (or vacuum) inlet or outlet or by inhibiting the action of toggle valve, as later referred to, which switches the supply and exhaust connections to the pump device.

The arrangement thus far described envisages a claw-less teat cluster, the cups connecting individually with the multibore hose through a simple manifold having a suitable bleed.

However, other arrangements are possible. For example, the claw to which the cluster is connected may be retained to accommodate at least the separator.

The milk-air separator means is preferably mounted within the housing (commonly referred to as a claw) to which the short milk tubes from the teat cups are connected and which hangs below an animal being milked during milking, and port means is provided to draw off milk from a region in the claw housing in which the separated milk collects. Where gravity is used to assist in the separation, the collection region will be located at a low point in the claw housing to which milk will drain as a result of separation whilst the claw housing hangs below an animal being milked. In this way milk can be drawn off through the port means to pass via tube means (commonly referred to as long milk tubes) to a milk collection vessel.

Preferably valve means is provided to control the flow of milk through the port means, when the opening of the valve means being inhibited except when sufficient milk is present in the claw housing.

Milk level detection means may be included in the claw housing to control the operation of the valve means.

Alternatively, the valve means and port means may be incorporated into a buoyant member located within the claw housing which will float as milk collects therein and which when cloating enables milk to pass through the valve means and vice versa.

In a preferred embodiment, the buoyant member is adapted to rest at the bottom of the interior of the claw housing when insufficient milk is present therein.

Preferably the lower interior of the claw housing is generally hemispherical and the exterior of the lower region of the buoyant member is of a complementary shape so that the buoyant member can settle against the interior of the claw housing whether the latter is hanging vertically below an animal or is tipped off the vertical.

The pump may to advantage be situated within the buoyant member.

Since a vacuum line is normally connected to the claw housing, to draw milk from the teats, the pump may be vacuum operated.

Alternatively and preferably, a compressed air-powered pump means may be employed so that the vacuum employed to milk the teats is unaffected by the operation of the pump and vice versa. Furthermore, a vacuum has a relatively low energy density as compared with compressed air.

Preferably therefore, a claw housing incorporating the invention will have connected thereto a milk line to carry milk away therefrom, a compressed air supply line, a constant vacuum line, a pulsating vacuum line, and an air exhaust (or return) line.

Conveniently some or all of the lines leading to and from the claw housing are grouped within a single umbilical cord.

Where linkage between the claw housing and the buoyant member is required within the housfing, this is preferably achieved through flexible coupling means to enable the buoyant member generally unrestricted movement within the claw housing.

The constant vacuum line connected to the claw housing provides suction at the teat cups in the usual way. Because the vacuum line has to do no more than overcome air leakage, it can be very much smaller than in current milking installations and since there will be no blockages in the vacuum line caused by slugs of milk, vacuum stability should be improved.

Preferably the entrance to the vacuum line in the claw housing is such that only very small airborne milk droplets pass into the vacuum tube, so that conventional equipment can be employed to ensure that these small milk deposits are properly rinsed out during cleaning.

Preferably the pump is a double-acting reciprocating pump.

Preferably the pump provides the same swept volume in each direction. Since this means that each reciprocation of the pump delivers a similar volume of milk, operation of the pump can be employed for metering the milk flow by counting the number of reciprocations of the pump.

The pump motion is preferably controlled by a shuttle valve which is toggled when the piston reaches the end of its travel, so ensuring a constant and repeatable volume discharge per stroke.

Where a toggle valve is provided for controlling the supply of compressed air to one cylinder or the other of a double acting reciprocating pump, counting the number of reciprocations may be achieved by counting the number of toggles of the air toggle valve.

Other features of the invention are defined in the appended claims.

The invention will now be described, by way of example, with reference to the accompanying drawings, in which:
Figure 1 is a perspective view, partly cut away, of a claw mounted pump for pumping milk collected from an animal:
Figure 2 is a diagrammatic cross-section through a double reciprocating pump adapted for mounting within a flotation chamber within the claw housing of Figure 1,
Figure 3 is a cross-section through the assembly shown in Figure 1, and
Figure 4 shows an alternative arrangement in which a clawless cup cluster is connected to a separate pumping unit.

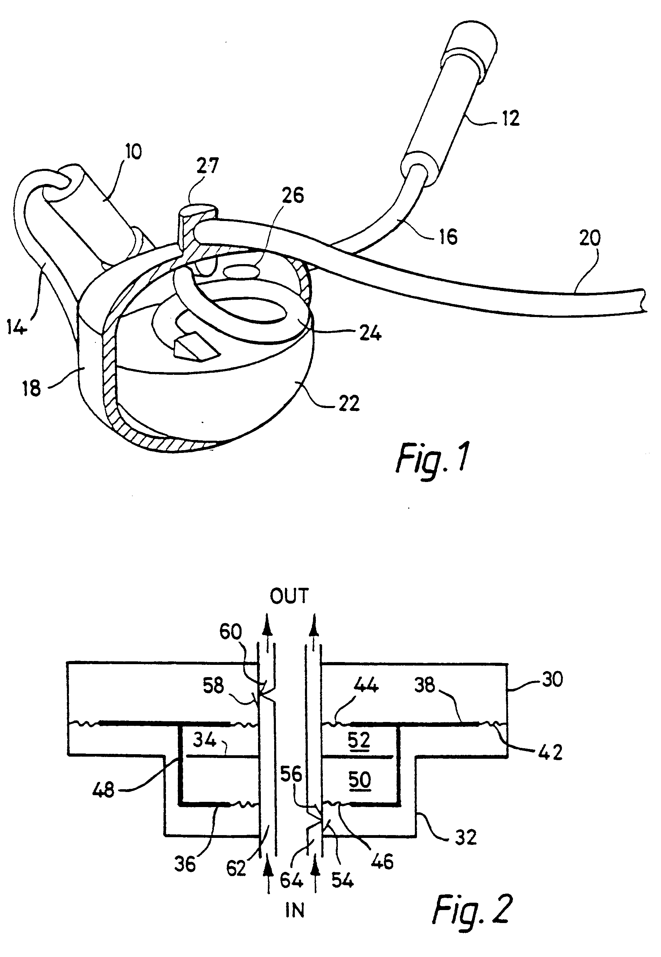

In Figure 1 two of the usual cluster of four teat cups of a milking machine are shown at 10, 12 and are connected via short milk tubes 14, 16 to a claw housing 18 shown cut away to reveal the interior. For convenience, the pulse tubes to the teat cups 10, 12 are omitted in the drawing.The long milk tube which conveys collected milk to a remote collection vessel (not shown) is contained within a multibore hose 20 which also connects the housing 18 to sources of pressurized air, vacuum, air exhaust and pulsating vacuum.

Within the housing 18 is a hemispherical flotation member 22 freely suspended within the housing 18 by a coiled umbilical hose extension 24 of the multicore hose 20.

A pump (not shown) is located within the flotation member 22 which cooperates with or forms part of a valve (not visible in Figure 1) for controlling the admission of milk to the pump.

Milk enters the housing 18 via ports, one of which is shown at 26 and after being separated from the air entrained therewith it drains to the base of the housing 18 where it collects and lifts the flotation member 22, to allow milk to reach the pump therein, by which it is pumped via flexible hosing 24, manifold 27 and multibore hose 20 to a milk collection vessel.

The flotation characteristics of the member 22 is arranged to be such that if there is insufficient milk to prime the pump or enable pumping to continue, the member 22 will sink to a position in which the valve is shut off and no further milk can enter the pump.

Figure 2 shows diagrammatically one form of double acting reciprocating pump containing a central tube surrounded by a stepped housing 30 and having extending therefrom a radial wall 34. Within the housing, a hollow piston 36 includes an upper plate 38, from which depends a lower cup 48. The plate 38, together with diaphragms 42 and 44, define above them an upper chamber within the housing 30 and the region below this divide comprises a lower chamber itself defined by the underside of the radially outer region of the plate 38, and the underside of the cup 48, the diaphragm 42, and diaphragm 46 within the lower part of the housing 30. A sliding seal (not shown) between the cylindrical wall of the cup 48 and the radial wall 34 prevents air from the lower region 50 within the hollow piston (below the wall 34) from reaching the upper region 52 within the hollow piston (above the wall 34), and vice versa.

Valves 54, 56 curtail the ingress and exit of milk from the lower chamber 32 and valves 58, 60 the ingress and exit of milk from the upper chamber 30.

If pressurised air is supplied to the lower region 50 and 52 is vented, the piston will move downwardly. If air is instead admitted to 52 and 50 is vented the piston will move upwardly.

Each movement of the piston will cause milk to be drawn into one and driven from the other of the two chambers 30, 32.

Valve means (not shown) controls the flow of milk in the two passages 62, 64 (which communicate with the valves 54, 56 and 58, 60) depending on whether the housing 22 is floating or not.

Alternatively or in addition, valve means (not shown) serves to control the flow of air to and from the chambers 50, 52 and if both valve means are employed an interlock or linkage (not shown) may be provided to shut off the inflow of air when the milk outlet valve (not shown) is closed.

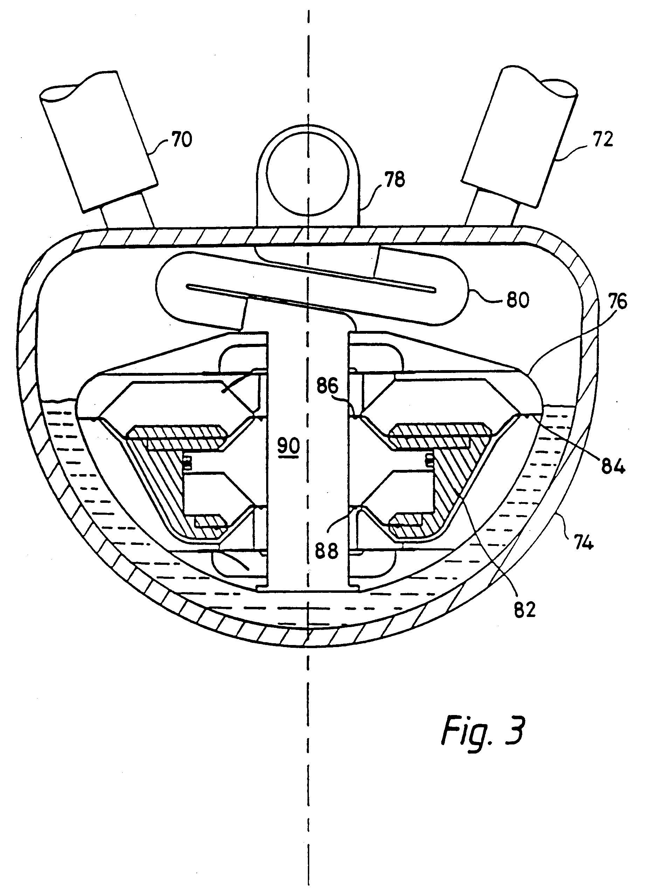

Figure 3 is a cross-section of a flotation chamber containing a pump in which milk enters via tubes 70, 72 (there could be more than two such tubes) and collects at the bottom of the casing 74 to cause the chamber 76 to float. The latter is connected to a manifold 78 via a multicore flexible hose 80. Within the chamber 76 is located a piston 82 attached by flexible diaphragms 84, 86 and 88 to the chamber 76 and a central hollow cylindrical pillar 90.

Metering can be achieved by counting pulses in the air exhaust line, as the pump operates, and a sample representative of the milk being metered can be obtainied through a suitably dimensioned orifice in the milk outflow pipe, leaking a small proportion of the flow into a sample vessel.

The central pillar 90 must accommodate two milk channels, two air supply lines, and two air exhaust lines. It is easy to show that all of these will fit into a cylinder of 20mm diameter without any great restrictions on the fluid flow.

Though the size of the driven side of the pump is determined solely by the volume flow rate which it must pass, the size of the driving side is determined by the force which it must apply. This, in turn, is determined by the pressure rise needed, which is made up from the back-pressure of the milk line flow, plus the difference between the claw pressure and the milk line discharge pressure, plus any pressure rise due to a change in height. If the collecting vessel is sealed and evacuated to the system vacuum pressure, then the pump only needs to overcome back-pressure and the head difference.

Back pressure can be predicted from a knowledge of the liquid viscosity and flow rate, and the pipe length, diameter, and surface roughness. A typical value for milk viscosity is 1.64x10⁻³ Pa S, and a typical peak flow rate can be 12 l/min or higher. If the long milk tube is assumed to be 2m long and 8mm in internal diameter, and is connected to a wall-mounted collection pipe 24m long and 30mm in diameter, discharging into a tank 2m above the level of the claw, then from these figures it is possible to predict the pressure needed on the discharge side of the pump to be 190kPa.

The pump wet area (the area on the driven side in contact with the milk) can be deduced from the known flow rate, the stroke length, and the number of cycles per minute. If it is assumed that the diaphragm pump has a 10mm stroke, and the pump can achieve 90 cycles per minute, then the wet area can be calculated as 6.67x10⁻³ m².

Since the wet area is known together with the pressure on that area, it is possible to calculate the force which must be delivered by the drive side. The drive pressure is taken as slightly less than the standard air-line pressure of 80psig to allow for pressure losses in the air line. Hence we can calculate the area required for the pump drive side 2.07x10⁻³m².

The diameters of the driving and driven parts of the piston can be calculated from their areas. The overall of the pump. This leads to an overall outer diameter for the claw of about 140mm, with a 200ml milk reservoir and a 5mm outer wall thickness.

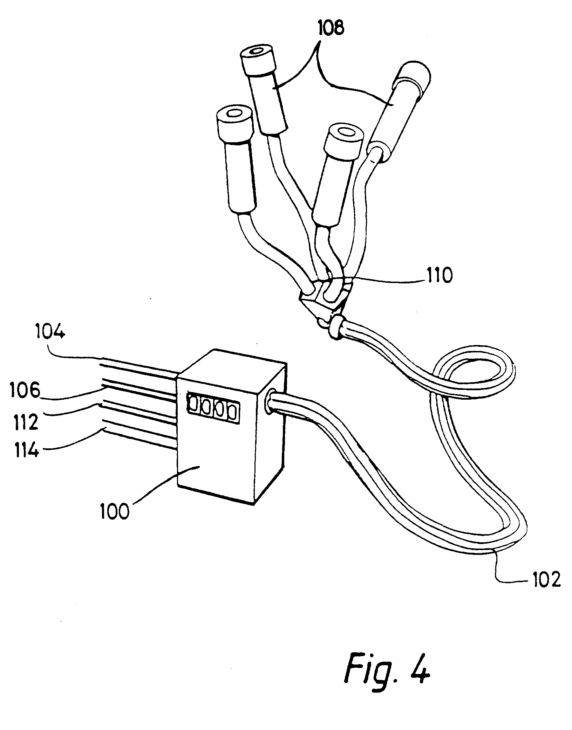

Figure 4 shows an arrangement in which the separating and pumping functions are performed in a unit separate from the milk claw. In fact, the conventional milk claw is dispensed with, as will be clear from the following description.

The pump is housed in a unit 100 which may be free-standing or mounted on the wall near the cow milking station. The unit is connected to the cow by a multi-bore hose 102 which keeps the milk from each quarter separate, without the usual claw. By keeping the milk tubes separate in this way, all risk of cross-infection between the quarters of an udder is removed. The pulsating vacuum supplied at 104 takes up the fifth bore of the hose, and constant vacuum is applied to the four hose milk-pipes in the usual way, being supplied at 106.

In order to improve the flow of milk from the teat cups 108 to the pumping unit 100, it may be necessary to provide an air bleed into the milk lines. This could be done either with a constant bleed through a fixed orifice, or it might be pulsed through the action of a bleed valve actuated by the pulsating vacuum. Such a synchronised bleed, if a bleed is necessary, would improve the flow by making it more regular and predictable. The bleed may be provided either at the point where the four milk tubes meet, as illustrated at 110 or individual bleeds could be provided at each of the four teat cups 108.

The pumping unit 100 contains a separator which receives the milk and air mixture emerging from all four milk lines and allows the milk to settle out before it is drawn into the pump. The separator can use a simple settling tank, from which milk is drawn at the lowest point, or it can use a float which draws liquid milk through a port on its underside, in the manner hitherto described with reference to Figures 1 to 3.

The pump can be of the reciprocating diaphragm kind for example or described hitherto with reference to Figure 2, and it can be driven by either vacuum or by compressed air supplied at 112, if this is available. The rate at which the pump draws off milk from the separator is regulated so that the separator never runs dry (until the end of milking is signalled by cluster removal) and the pump only ever deals with single phase liquid milk. This will allow a simple single phase integrating flowmeter to provide the required milk metering function, or, if provision is made in the design, the pump can be made a metering pump. Regulation of the pumping rate can be controlled by a conventional float level detector in the separator, and operational control may be effected by throttling the milk input or output, or the compressed air (or vacuum) inlet or outlet, or by inhibiting the action of the toggle valve which switches the supply and exhaust connections to the pump drive. The milk outlet line is referenced 114.

Instead of employing a multibore hose as illustrated, the pumping unit 100 could be connected to a claw cluster through a single milk link and, in this case, the claw could incorporate a float separator, for example of the kind hitherto described.

## Claims

1. Milking apparatus wherein, at a multiple milking site whereat one or more animals are to be milked, an individual milk-air separator/pump means (100) is provided for each animal being milked, whereby milk separated from a milk-air mixture obtained from the individual animal is pumped away, characterised in that the separator/pump means comprises a pump and a housing within which the pump is located and which receives the milk and allows it to settle before it is drawn into the pump.

2. Apparatus according to claim 1, wherein the separator/pump means (100) is connected to the animal by multiple hose means (102) which keeps the milk from each teat separate, a constant vacuum being applied to each milk hose bore and a further hose bore having a pulsating vacuum applied to it.

3. Apparatus according to claim 2, wherein flow of milk to the separator/pump means is facilitated by provision of a pulsed air bleed into the milk lines, obtained by the action of a bleed valve activated by the pulsating vacuum.

4. Apparatus according to any of claims 1 to 3, wherein the pump is a reciprocating diaphragm pump, for example driven by vacuum or compressed air (Fig.2).

5. Apparatus according to any of claims 1 to 4, wherein regulation of the pumping rate is obtained by means of a float level detector in the separator.

6. Apparatus according to claim 5, wherein control of the pump is effected by inhibiting the action of toggle valve which switches the supply and exhaust connections to the pump.

7. Apparatus according to any of claims 1 to 6, including a claw-less teat cluster in which the cups connect individually with a multibore hose through a manifold having an air bleed.

8. Apparatus according to any of claims 1 to 7, wherein the housing (18) constitutes a claw to which short milk tubes (14;16) from the teat cups are connected and which hangs below an animal being milked during milking, and port means is provided to draw off milk from the region in the claw housing in which the separated milk collects.

9. Apparatus according to claim 8, wherein valve means is provided to control the flow of milk through the port means, the opening of the valve means being inhibited except when sufficient milk is present in the claw housing.

10. Apparatus according to claim 9, wherein milk level detection means is included in the claw housing (18) to control the operation of the valve means.

11. Apparatus according to claim 9, wherein the valve means and port means are incorporated into a buoyant member (22;76) located within the claw housing (18) and which will float as milk collects therein and which when floating enables milk to pass through the valve means and vice versa, the buoyant member being adapted to seat at the bottom of the interior of the claw housing when insufficient milk is present therein.

12. Apparatus according to claim 11, wherein the pump is located within the buoyant member.

13. Apparatus according to claim 11, wherein the claw housing incorporating the pump has connected thereto a milk line to carry milk away therefrom, a compressed air supply line to drive the pump, a constant vacuum line to draw milk from the teats, a pulsating vacuum line to activate the teats and an air exhaust line.

14. Apparatus according to any one preceding claim, wherein the pump is a double-acting reciprocating pump.

15. Apparatus according to claim 14, wherein a bistable device is employed to control the supply of compressed air to the pump, to ensure that operation of the pump into its ON and OFF modes is positive.

16. Apparatus according to claim 14 or claim 15, wherein the known stroke rate of the reciprocating pump is utilised for milk metering.

17. Apparatus according to any of claims 8 to 16, wherein an air bleed into the claw housing (18) is taken from the pump exhaust line without significant effect on the pump performance.

18. Apparatus according to any of claims 1 to 17, wherein an average sample of the milk yield during a milking session is taken by continuously bleeding a small portion of milk from the pressurised milk outlet line into a sample vessel.

## Patentansprüche

1. Melkmaschine, bei der an einer Mehrfachmelkstelle, an der ein oder mehrere Tiere zu melken sind, für jedes zu melkende Tier ein eigenes Milch-Luftseparator/Pumpenmittel (100) vorgesehen ist, so daß Milch, die von dem von dem einzelnen Tier erhaltenen Milch-Luftgemisch abgetrennt wurde, abgepumpt wird, dadurch gekennzeichnet, daß das Separator/Pumpenmittel eine Pumpe und ein Gehäuse umfaßt, in dem die Pumpe angewendet wird und das die Milch aufnimmt und ihr Setzen vor dem Einziehen in die Pumpe zuläßt.

2. Maschine nach Anspruch 1, wobei das Separator/Pumpenmittel (100) mit dem Tier über ein Mehrfachschlauchmittel (102) verbunden ist, das die Milch aus jeder Zitze getrennt hält, und ein konstantes Vakuum an jede Milchschlauchbohrung und an eine weitere Schlauchbohrung ein pulsierendes Vakuum angelegt wird.

3. Maschine nach Anspruch 2, wobei eine Milchströmung zum Separator/Pumpenmittel durch die Ausbildung eines pulsierenden Luftstroms in die Milchleitungen erleichtert wird, wobei der Luftstrom durch die Tätigkeit eines durch das pulsierende Vakuum betätigten Entlüftungsventils erhalten wird.

4. Maschine nach irgendeinem der Ansprüche 1 bis 3, wobei die Pumpe eine hin- und hergehende, zum Beispiel von Vakuum oder Druckluft angetriebene Membranpumpe ist (Fig. 2).

5. Maschine nach irgendeinem der Ansprüche 1 bis 4, wobei die Regelung der Pumpengeschwindigkeit mit Hilfe eines in dem Separator angeordneten Schwimmerpegeldetektors erzielt wird.

6. Maschine nach Anspruch 5, wobei die Regelung der Pumpe durch Unterbinden der Einwirkung eines Kniehebelventils, das die Zu- und Abführungsverbindungen der Pumpe schaltet, bewirkt wird.

7. Maschine nach irgendeinem der Ansprüche 1 bis 6, einschließlich eines klauenlosen Zitzenbündels, in dem die Kappen über eine Sammelleitung mit einem Luftablaß einzeln mit einem Mehrfachbohrungsschlauch verbunden sind.

8. Maschine nach irgendeinem der Ansprüche 1 bis 7, wobei das Gehäuse (18) eine Klaue darstellt, an die von den Zitzenkappen ausgehende kurze Milchrohre (14, 16) angeschlossen sind und die während des Melkens unter einem gemolkenen Tier hängt, und wobei ein Öffnungsmittel zum Abziehen der Milch aus dem Gebiet in dem Klauengehäuse, in dem sich die abgetrennte Milch ansammelt, vorgesehen ist.

9. Maschine nach Anspruch 8, wobei ein Ventilmittel zum Steuern des Milchflusses durch das Öffnungsmittel vorgesehen ist und das Öffnen des Ventilmittels unterbunden wird, ausgenommen dann, wenn in dem Klauengehäuse genügend Milch vorhanden ist.

10. Maschine nach Anspruch 9, wobei ein Milchpegeldetektionsmittel in dem Klauengehäuse (18) zum Steuern des Betriebes des Ventilmittels enthalten ist.

11. Maschine nach Anspruch 9, wobei das Ventilmittel und das Öffnungsmittel in ein in dem Klauengehäuse (18) angeordneten Auftriebsglied (72, 76) eingeschlossen sind, das beim Ansammeln der Milch in dem Gehäuse in diesem aufschwimmt und das beim Aufschwimmen den Durchtritt der Milch durch das Ventilmittel zuläßt und umgekehrt, wobei das Auftriebsglied am Boden des Innenraums des Klauengehäuses, wenn sich in diesem nicht genügend Milch befindet, aufsitzen kann.

12. Maschine nach Anspruch 11, wobei die Pumpe in dem Auftriebsglied angeordnet ist.

13. Maschine nach Anspruch 11, wobei an das die Pumpe enthaltende Klauengehäuse zum Abführen der Milch eine an es angeschlossene Milchleitung, eine Druckluftversorgungsleitung zum Antreiben der Pumpe, eine Leitung mit konstantem Vakuum zum Abziehen der Milch aus den Zitzen, eine Leitung mit pulsierendem Vakuum zum Aktivieren der Zitzen und eine Luftabführungsleitung angeschlossen sind.

14. Maschine nach irgendeinem vorhergehenden Anspruch, wobei die Pumpe eine doppelt wirkende, hin- und hergehende Pumpe ist.

15. Maschine nach Anspruch 14, wobei eine bistabile Vorrichtung zum Steuern der Zufuhr von Druckluft zu der Pumpe verwendet wird, um sicherzustellen, daß der Betrieb der Pumpe in Ein- und Aus-Zustand positiv ist.

16. Maschine nach Anspruch 14 oder Anspruch 15, wobei die bekannte Hubgeschwindigkeit der hin- und hergehenden Pumpe zur Milchbemessung verwendet wird.

17. Maschine nach irgendeinem der Ansprüche 8 bis 16, wobei ein Luftstrom in das Klauengehäuse (18) von der Pumpenabführungsleitung ohne merkbare Auswirkung auf das Pumpenverhalten abgenommen wird.

18. Maschine nach irgendeinem der Ansprüche 1 bis 17, wobei eine Durchschnittsprobe des Milchertrages während einer Melkperiode durch kontinuierliches Eingeben einer kleinen Milchmenge aus der unter Druck stehenden Milchauslaßleitung in ein Probegefäß genommen wird.

## Revendications

1. Trayeuse dans laquelle, sur un emplacement de traite multiple, où un ou plusieurs animaux doivent être traits, une pompe/séparatrice lait/air (100) est prévue pour chaque animal, au moyen de laquelle le lait, séparé du mélange lait/air obtenu à partir de chaque animal, est pompé, caractérisée en ce que la pompe/séparatrice comprend une pompe et un carter, dans lequel se trouve la pompe, qui reçoit le lait et le laisse y reposer jusqu'à ce qu'il soit pompé.

2. Appareil selon la revendication 1, dans lequel la pompe/séparatrice (100) est reliée à l'animal par un tuyau multiple (102) qui garde séparément la lait de chaque trayon, un vide constant étant appliqué à chaque extrémité de tuyau à lait et un vide pulsé étant appliqué à l'extrémité d'un tuyau supplémentaire.

3. Appareil selon la revendication 2, dans lequel l'écoulement du lait vers la pompe/séparatrice est facilité par une évacuation pulsée de l'air contenu dans chaque tuyau à lait, obtenue par l'action d'une soupape d'évacuation actionnée par le vide pulsé.

4. Appareil selon l'une quelconque des revendications 1 à 3, dans lequel la pompe est une pompe à membrane à piston alternatif, actionnée par exemple par le vide ou par de l'air comprimé (figure 2).

5. Appareil selon l'une quelconque des revendications 1 à 4, dans lequel la régulation du débit de la pompe est obtenue au moyen d'un détecteur de niveau de flottaison situé dans la séparatrice.

6. Appareil selon la revendication 5, dans lequel le contrôle de la pompe est effectué par blocage de l'action d'une soupape à bascule qui commute les liaisons de remplissage et des vidange de la pompe.

7. Appareil selon l'une quelconque des revendications 1 à 6, incluant un faisceau trayeur sans pinces, dans lequel les gobelets trayeurs sont connectés individuellement à un tuyau à orifices multiples, au travers d'un collecteur à évacuation d'air.

8. Appareil selon l'une quelconque des revendications 1 à 7, dans lequel le carter (18) constitue une pince à laquelle de petits tuyaux à lait (14;16), venant des gobelets trayeurs, sont reliés et pendent sous l'animal pendant la traite, des moyens d'entrée étant prévus pour retirer les différents laits de la zone du carter où ils sont recueillis.

9. Appareil selon la revendication 8, dans lequel des soupapes sont prévues pour contrôler l'écoulement du lait au travers des moyens d'entrée, l'ouverture des soupapes étant bloquée sauf lorsqu'une quantité suffisante de lait est présente dans le carter.

10. Appareil selon la revendication 9, dans lequel des moyens de détection de niveau de lait sont inclus dans le carter (18) pour contrôler le fonctionnement des soupapes.

11. Appareil selon la revendication 9, dans lequel les soupapes et les moyens d'entrée sont incorporés dans un élément flottant (22;76), situé dans le carter (18), qui flotte lorsque le lait y est recueilli et qui permet au lait, lorsqu'il flotte, de passer par la soupape et vice versa, cet élément flottant étant conçu pour séjourner dans le fond du carter lorsqu'une quantité insuffisante de lait s'y trouve.

12. Appareil selon la revendication 11, dans lequel la pompe est située à l'intérieur de l'élément flottant.

13. Appareil selon la revendication 11, dans lequel le carter, contenant la pompe, est relié à un tuyau pour en sortir le lait, à une arrivée d'air comprimé pour commander la pompe, à un tuyau sous vide constant pour retirer le lait des gobelets, à un tuyau sous vide pulsé pour actionner les trayons et à une sortie d'air.

14. Appareil selon l'une quelconque des revendications précédentes, dans lequel la pompe est une pompe à piston alternatif à double effet.

15. Appareil selon la revendication 14, dans lequel un dispositif bistable est employé pour contrôler l'alimentation en air comprimé de la pompe, afin d'assurer un fonctionnement correct de celle-ci dans ses modes marche/arrêt.

16. Appareil selon la revendication 14 ou 15, dans lequel le débit par coup connu de la pompe est utilisé pour mesurer la quantité de lait.

17. Appareil selon l'une quelconque des revendications 8 à 16, dans lequel une évacuation d'air dans le carter (18) est prise sur le tuyau d'évacuation de la pompe, sans effet significatif sur l'efficacité de la pompe.

18. Appareil selon l'une quelconque des revendications 1 à 17, dans lequel un échantillon moyen du lait recueilli pendant la traite est prélevé par évacuation continue d'une petite partie de lait, depuis le tuyau pressurisé de sortie du lait vers un récipient d'échantillon.
